# EUROPEAN PATENT APPLICATION

(11) **EP 4 651 420 A1**
(43) Date of publication of application: **19.11.2025**
(21) Application number: 24741746.2
(22) Date of filing: 12.01.2024
(51) Int. Cl.: H04L 5/00, H04L 5/14

(54) **METHOD AND DEVICE FOR TRANSMITTING OR RECEIVING DOWNLINK CONTROL CHANNEL IN FULL DUPLEX COMMUNICATION**

(30) Priority: 12.01.2023 KR 20230004678; 11.01.2024 KR 20240005029
(71) Applicant: KT Corporation, Seongnam-si, Gyeonggi-do 13606 (KR)
(72) Inventor: PARK, Kyu Jin, Seongnam-si Gyeonggi-do 13606 (KR)
(74) Representative: Santarelli
(86) International application number: PCT/KR2024/000604
(87) International publication number: WO 2024/151125

(57) **Abstract**

Provided is a method of receiving a downlink control channel by a terminal in full duplex communication. The method may include receiving control resource set configuration information on at least one control resource set for receiving a downlink control channel, receiving search space set configuration information on at least one search space set on the basis of the control resource set configuration information, and monitoring a downlink control channel in at least one PDCCH monitoring occasion determined on the basis of the control resource set configuration information and the search space set configuration information. The monitoring of the downlink control channel includes distinguishing between a PDCCH monitoring occasion configured by only downlink symbols or SBFD symbols and a PDCCH monitoring occasion including both downlink symbols and SBFD symbols so as to monitor the downlink control channel.

## Description

### Technical Field

The disclosure relates to methods and devices for transmitting and receiving a downlink control channel in a next-generation radio access network (hereinafter, "new radio (NR)").

### Background Art

Recently, the 3rd generation partnership project (3GPP) has approved the "Study on New Radio Access Technology", which is a study item for research on next-generation/5G radio access technology(hereinafter, referred to as "new radio" or "NR"). On the basis of the Study on New Radio Access Technology, Radio Access Network Working Group 1 (RAN WG1) has been discussing frame structures, channel coding and modulation, waveforms, multiple access methods, and the like for the new radio (NR). It is required to design the NR not only to provide an improved data transmission rate as compared with the long term evolution (LTE)/LTE-Advanced, but also to meet various requirements in detailed and specific usage scenarios.

An enhanced mobile broadband (eMBB), massive machine-type communication (mMTC), and ultra reliable and low latency communication (URLLC) are proposed as representative usage scenarios of the NR. In order to meet the requirements of the individual scenarios, it is required to design the NR to have flexible frame structures, compared with the LTE/LTE-Advanced.

Because the requirements for data rates, latency, reliability, coverage, etc. are different from each other, there is a need for a method for efficiently multiplexing a radio resource unit based on different numerologies from other (e.g., subcarrier spacing, subframe, Transmission Time Interval (TTI), etc.) as a method for efficiently satisfying each usage scenario requirement through a frequency band constituting any NR system.

As part of this aspect, there is a need for a specific design that enables downlink control channel transmission/reception in a symbol where full-duplex communication is applied in a wireless network.

### Detailed Description of the Invention

### Technical Problem

The disclosure may provide a method and device for transmitting/receiving a downlink control channel in full-duplex communication.

### Technical Solution

In an aspect, the disclosure may provide a method for receiving a downlink control channel (physical downlink control channel (PDCCH)) by a user equipment (UE) in full-duplex communication. The method may include receiving control resource set configuration information for at least one control resource set (CORESET) for reception of a downlink control channel, receiving search space set configuration information for at least one search space set (SS set) based on the control resource set configuration information, and monitoring the downlink control channel at one or more PDCCH monitoring occasions determined based on the control resource set configuration information and the search space set configuration information, wherein monitoring the downlink control channel includes performing monitoring of the downlink control channel separately for a PDCCH monitoring occasion configured with only one of a downlink symbol or a subband full duplex (SBFD) symbol and a PDCCH monitoring occasion configured with both the downlink symbol and the SBFD symbol.

In another aspect, the disclosure may provide a method for transmitting a downlink control channel (physical downlink control channel (PDCCH)) by a base station in full-duplex communication. The method may include transmitting control resource set configuration information for at least one control resource set (CORESET) for reception of a downlink control channel, transmitting search space set configuration information for at least one search space set (SS set) based on the control resource set configuration information, and transmitting the downlink control channel at at least one PDCCH monitoring occasion determined based on the control resource set configuration information and the search space set configuration information, wherein transmitting the downlink control channel includes transmitting the downlink control channel separately for a PDCCH monitoring occasion configured with only one of a downlink symbol or a subband full duplex (SBFD) symbol and a PDCCH monitoring occasion configured with both the downlink symbol and the SBFD symbol.

In another aspect, the disclosure may provide a user equipment (UE) receiving a downlink control channel (physical downlink control channel (PDCCH)) in full-duplex communication. The UE may include a transmitter, a receiver, and a controller controlling an operation of the transmitter and the receiver, wherein the controller receives control resource set configuration information for at least one control resource set (CORESET) for reception of a downlink control channel, receives search space set configuration information for at least one search space set (SS set) based on the control resource set configuration information, and monitors the downlink control channel at at least one PDCCH monitoring occasion determined based on the control resource set configuration information and the search space set configuration information, wherein the controller performs monitoring of the downlink control channel separately for a PDCCH monitoring occasion configured with only one of a downlink symbol or a subband full duplex (SBFD) symbol and a PDCCH monitoring occasion configured with both the downlink symbol and the SBFD symbol.

In another aspect, the disclosure may provide a base station transmitting a downlink control channel (physical downlink control channel (PDCCH)) in full-duplex communication. The base station may include a transmitter, a receiver, and a controller controlling an operation of the transmitter and the receiver, wherein the controller transmits control resource set configuration information for at least one control resource set (CORESET) for reception of a downlink control channel, transmits search space set configuration information for at least one search space set (SS set) based on the control resource set configuration information, and transmits the downlink control channel at one or more PDCCH monitoring occasions determined based on the control resource set configuration information and the search space set configuration information, wherein the controller transmits the downlink control channel separately for a PDCCH monitoring occasion configured with only one of a downlink symbol or a subband full duplex (SBFD) symbol and a PDCCH monitoring occasion configured with both the downlink symbol and the SBFD symbol.

### Advantageous Effects

According to the embodiments, a downlink control channel may be efficiently transmitted and received within a slot or symbol where full-duplex communication is applied.

### Brief Description of Drawings

FIG. 1 is a view schematically illustrating an NR wireless communication system in accordance with embodiments of the present disclosure.
FIG. 2 is a view schematically illustrating a frame structure in an NR system in accordance with embodiments of the present disclosure.
FIG. 3 is a view for explaining resource grids supported by a radio access technology in accordance with embodiments of the present disclosure.
FIG. 4 is a view for explaining bandwidth parts supported by a radio access technology in accordance with embodiments of the present disclosure.
FIG. 5 is a view illustrating an example of a synchronization signal block in a radio access technology in accordance with embodiments of the present disclosure.
FIG. 6 is a signal diagram for explaining a random access procedure in a radio access technology in accordance with embodiments of the present disclosure.
FIG. 7 is a view for explaining CORESET.
FIG. 8 is a flowchart illustrating a method of receiving a downlink control channel by a UE according to an embodiment.
FIG. 9 is a flowchart illustrating a method of transmitting a downlink control channel by a base station according to an embodiment.
FIGS. 10 and 11 are views illustrating a TDD frame in which an uplink subband is configured in a downlink slot according to an embodiment.
FIG. 12 is a block diagram illustrating a UE according to another embodiment.
FIG. 13 is a block diagram illustrating a base station according to another embodiment.

### Mode for Carrying out the Invention

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR introduces a wireless communication system employing a new waveform and frame structure technology, a low-latency technology, a super-high frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

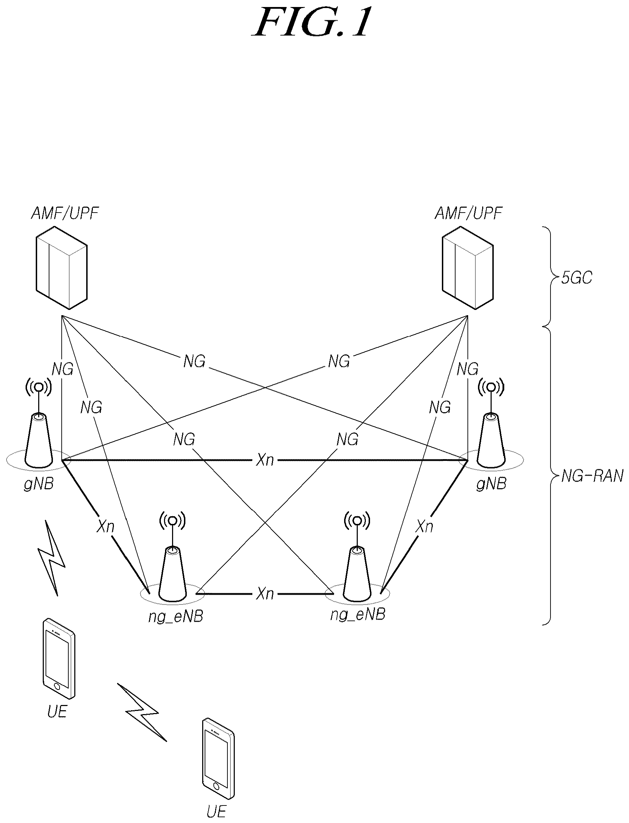

FIG. 1 is a view schematically illustrating an NR system to which the present embodiment is applicable.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

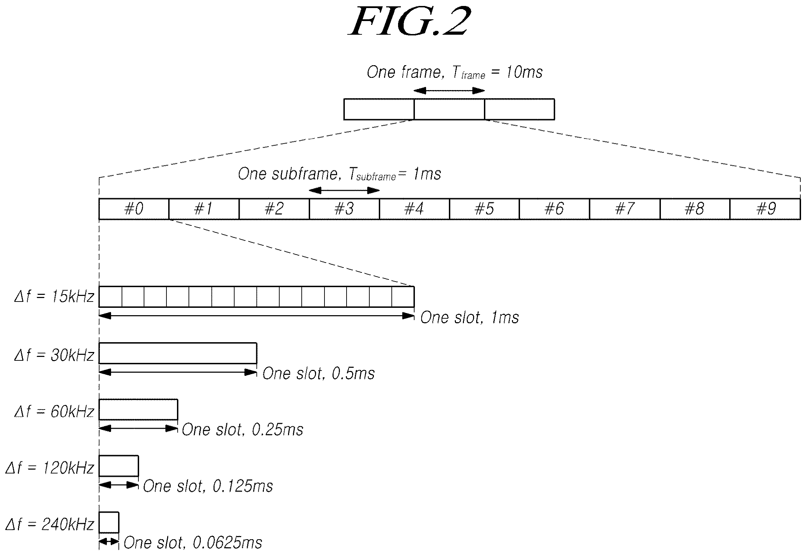

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system to which the present embodiment may be applied. Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

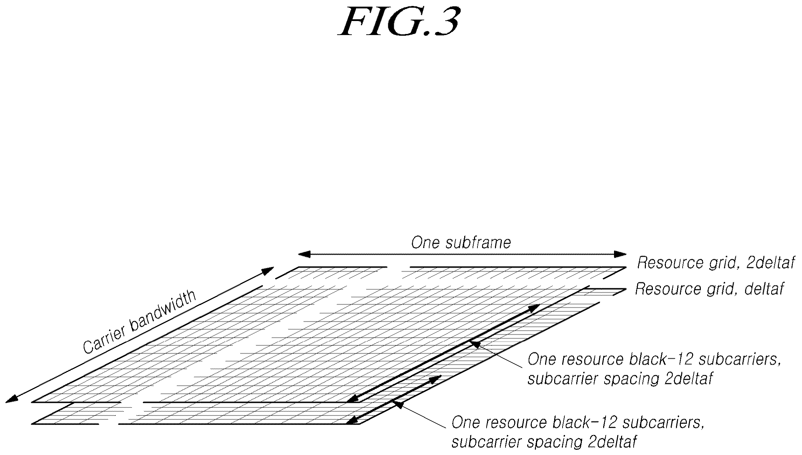

FIG. 3 illustrates resource grids supported by a radio access technology in accordance with embodiments of the present disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

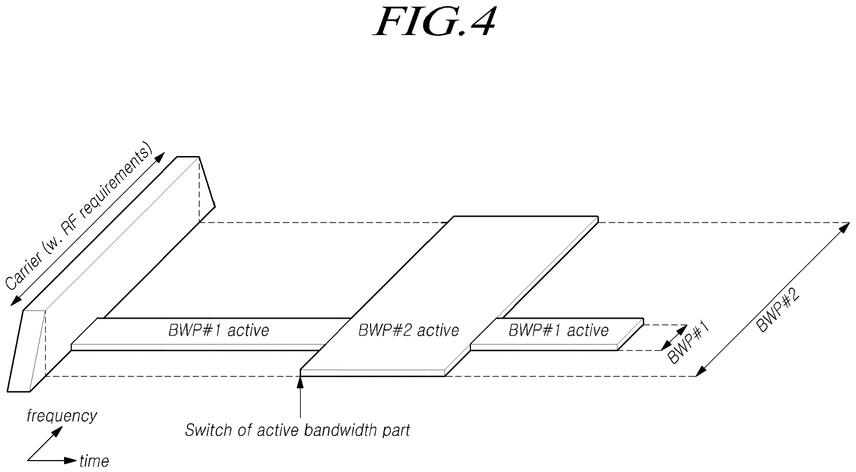

FIG. 4 illustrates bandwidth parts supported by a radio access technology in accordance with embodiments of the present disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

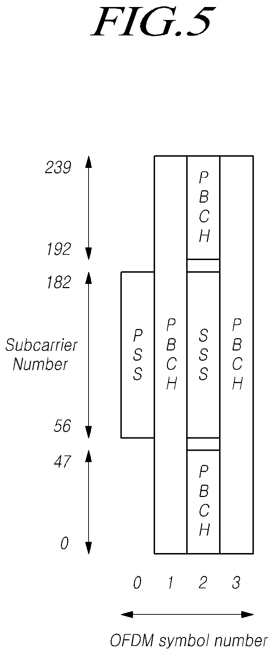

FIG. 5 illustrates an example of a synchronization signal block in a radio access technology in accordance with embodiments of the present disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

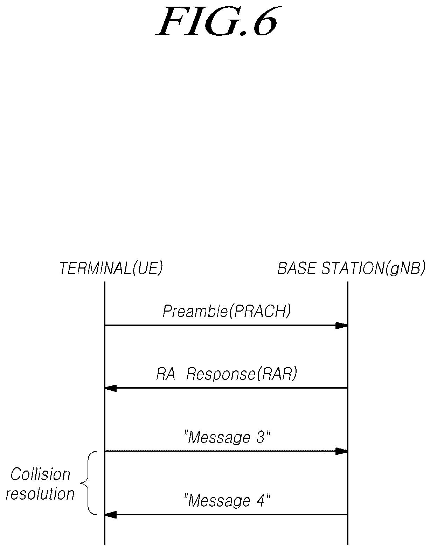

FIG. 6 is a view for explaining a random access procedure in a radio access technology to which the present embodiment is applicable.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

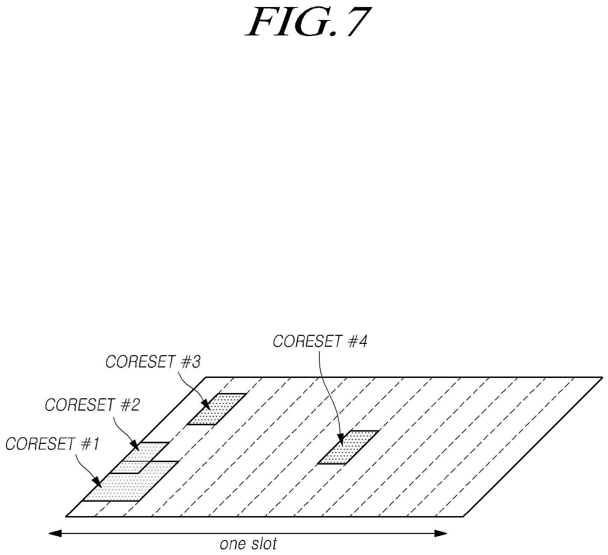

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

### Wider bandwidth operations

The typical LTE system supports scalable bandwidth operations for any LTE CC (component carrier). That is, according to a frequency deployment scenario, an LTE provider may configure a bandwidth of a minimum of 1.4 MHz to a maximum of 20 MHz in configuring a single LTE CC, and a normal LTE UE supports a transmission/reception capability of a bandwidth of 20 MHz for a single LTE CC.

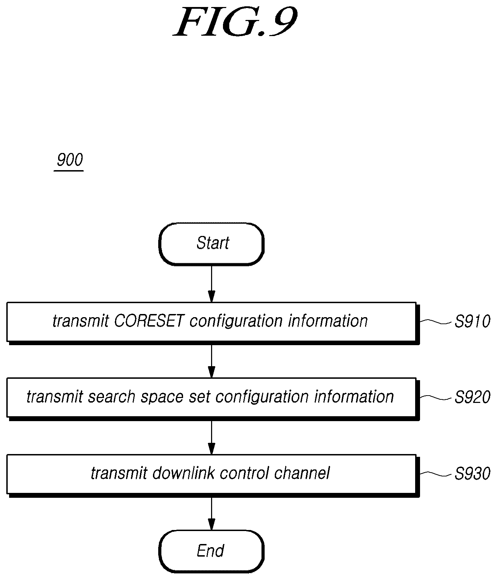

However, the NR is designed to support the UE of NR having different transmission/reception bandwidth capabilities over a single wideband NR CC. Accordingly, it is required to configure one or more bandwidth parts (BWPs) including subdivided bandwidths for an NR CC as shown FIG. 9, thereby supporting a flexible and wider bandwidth operation through configuration and activation of different bandwidth parts for respective UEs.

Specifically, one or more bandwidth parts may be configured through a single serving cell configured for a UE in NR, and the UE is defined to activate one downlink (DL) bandwidth part and one uplink (UL) bandwidth part to use the same for uplink/downlink data transmission/reception in the corresponding serving cell. In addition, in the case where a plurality of serving cells is configured for the UE (i.e., the UE to which CA is applied), the UE is also defined to activate one downlink bandwidth part and/or one uplink bandwidth part in each serving cell to use the same for uplink/downlink data transmission/reception by utilizing radio resources of the corresponding serving cell.

Specifically, an initial bandwidth part for an initial access procedure of a UE may be defined in a serving cell; one or more UE-specific bandwidth parts may be configured for each UE through dedicated RRC signaling, and a default bandwidth part for a fallback operation may be defined for each UE.

It is possible to define simultaneously activating and using a plurality of downlink and/or uplink bandwidth parts according to the capability of the UE and the configuration of the bandwidth parts in a serving cell. However, NR rel-15 defined activating and using only one downlink (DL) bandwidth part and one uplink (UL) bandwidth part at a time.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

Hereinafter, a method for receiving a downlink control channel (physical downlink control channel (PDCCH)) by a UE in full-duplex communication is described in detail with reference to the related drawings.

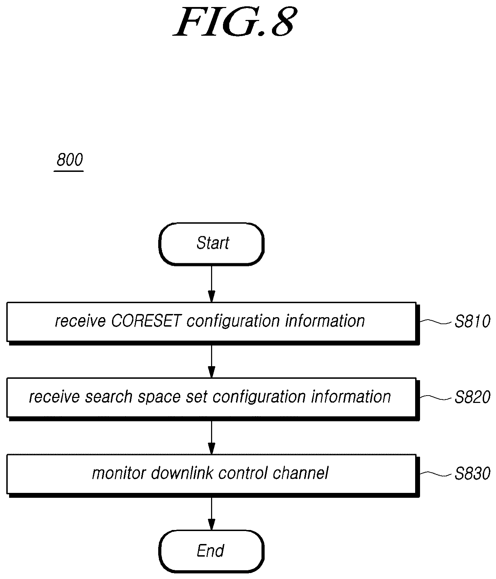

FIG. 8 is a flowchart illustrating a method 800 of receiving a downlink control channel by a UE according to an embodiment.

Referring to FIG. 8, the UE may receive control resource set (CORESET) configuration information for at least one control resource set (CORESET) for reception of a downlink control channel, and receive search space set (SS set) configuration information for at least one search space set (SS set) based on the control resource set configuration information (S820).

Full-duplex communication is a technique in which a gNB (e.g., a base station) simultaneously performs downlink (DL) transmission and uplink (UL) reception in the same radio resource. The UE side may simultaneously perform DL reception and UL transmission as well. When the base station supports full-duplex communication based on non-overlapping subband, a specific frequency resource in the same symbol in the TDD carrier is used for downlink transmission, and another frequency resource is used for uplink reception. In other words, a subband may be configured as an arbitrary frequency resource to support a transmission direction other than the transmission direction of DL, UL or flexible set by the TDD configuration information.

In other words, for the TDD carrier, some frequency resources may be utilized for uplink transmission of the UE in any DL slot or DL symbol, or may be utilized like a flexible symbol for downlink/uplink transition. Alternatively, some frequency resources in any UL slot or UL symbol may be configured to be utilized for downlink transmission of the base station. For example, when an uplink subband is configured in any DL slot, the uplink subband may be set at the center of the corresponding frequency band or at the edge of the corresponding frequency band. In this case, a guard band may be configured between the uplink subband and the downlink subband (DL subband) in the corresponding slot. As such, a DL slot or symbol including an uplink subband or an uplink slot or symbol including a downlink subband is referred to as a subband full duplex (SBFD) slot or SBFD symbol in the disclosure. In contrast, the term "downlink symbol" or "uplink symbol" herein refers to a non-SBFD symbol in which neither an uplink subband nor a downlink subband is configured. However, the term SBFD is for convenience of description, and the scope of the disclosure is not limited thereby and may be referred to by other terms as necessary.

For the reception of a downlink control channel of an UE, up to three control resource sets (CORESETs) may be configured per downlink bandwidth part (DL BWP) for the UE. The control resource set configuration information (which is also referred to as control resource set setting information or CORESET configuration information in the disclosure) may include frequency and time resource allocation information constituting the CORESET, such as PRB allocation information and consecutive symbol allocation information, DM-RS scrambling sequence ID information, precoder granularity information, control resource element-to-resource element (CCE-to-REG) mapping information, and TCI-state information, along with CORESET index information corresponding to the identification information of the control resource set.

Further, the base station may transmit search space set (SS) configuration information (which may also be referred to as search space set setting information or SS set configuration information in the disclosure) for PDCCH monitoring of the UE to the corresponding UE. The search space set configuration information may include search space set index (SS set index) information, control resource set association (CORESET association) information, PDCCH monitoring period information and offset information, monitoring pattern (symbol) information in PDCCH monitoring slots, duration information, monitoring slot information in a slot group (option), number setting information of PDCCH candidates for each aggregation level (AL), search space type (SS type) information, DCI format setting information, or the like.

Referring back to FIG. 8, the UE may monitor the downlink control channel at one or more PDCCH monitoring occasions determined based on the control resource set configuration information and the search space set configuration information (S830).

The PDCCH monitoring occasion configured for the UE refers to one search space composed of PDCCH candidates for each aggregation level configured through the corresponding associated CORESET in symbols of slots determined by PDCCH monitoring period information and offset information, monitoring pattern (symbol) information in PDCCH monitoring slots, duration information, monitoring slot information in a slot group, etc., included in the search space set configuration information.

The UE performs monitoring on PDCCH candidates in CORESET resources according to the search space set configuration information. However, when the UE is configured or instructed to perform uplink transmission operation through the uplink subband in a DL symbol including the uplink subband, i.e., an SBFD symbol, the UE may not perform PDCCH monitoring operation according to the search space set configuration in the corresponding SBFD symbol. Further, even when the UE performs downlink reception operation through the downlink subband in an SBFD symbol (e.g., the remaining frequency band except for the uplink subband and guard band from the frequency band that may be allocated to the UE), the performance of PDCCH monitoring operation according to the search space set configuration information in the corresponding SBFD symbol may not be valid according to whether there is an overlap or the degree of overlap between the configured CORESET resource and the uplink subband resource.

Therefore, when the PDCCH monitoring occasion or PDCCH candidates by the SS set configured for the UE partially or entirely include SBFD symbols, the UE may distinguish between PDCCH monitoring occasions configured with only downlink symbols or SBFD symbols and PDCCH monitoring occasions configured with both downlink symbols and SBFD symbols to perform monitoring of the downlink control channel. In other words, the monitoring operation when the time period of the PDCCH monitoring occasion is configured with only downlink symbols or only SBFD symbols and the monitoring operation when the time period of the PDCCH monitoring occasion includes at least one downlink symbol and at least one SBFD symbol may be set separately from each other.

According to an example, the UE may skip monitoring of the downlink control channel for PDCCH monitoring occasions configured with both downlink symbols and SBFD symbols. In other words, the UE may perform monitoring of the downlink control channel only when the time period of the PDCCH monitoring occasion is configured with only downlink symbols or only SBFD symbols. Specifically, when the PDCCH monitoring occasion or PDCCH candidates according to the SS set configured for the UE partially or entirely overlap SBFD symbols, the UE may be configured to skip monitoring (e.g., blind decoding) of the PDCCH monitoring occasion or PDCCH candidates.

To that end, the UE may be configured to perform PDCCH monitoring only when predetermined conditions are met. For example, when the UE is configured or instructed by the base station to perform uplink transmission operation through the uplink subband in the corresponding SBFD symbol, the UE may be configured to skip monitoring of the PDCCH monitoring occasion or PDCCH candidates according to the SS set configured for the UE.

Alternatively, when the UE is configured or instructed by the base station to perform downlink reception operation in the corresponding SBFD symbol, if the CORESET associated with the corresponding SS set at least partially overlaps the uplink subband or guard band, the UE may be configured to skip PDCCH monitoring. Alternatively, when the UE is configured or instructed by the base station to perform downlink reception operation in the corresponding SBFD symbol, even when the CORESET associated with the corresponding SS set entirely belongs to the downlink subband, if configured or instructed to skip monitoring of the corresponding PDCCH by the base station, the UE may be configured to skip PDCCH monitoring.

According to another example, the UE may perform monitoring of the downlink control channel for PDCCH monitoring occasions configured with both downlink symbols and SBFD symbols according to whether monitoring of the downlink control channel is configured or instructed by the base station. In other words, when the PDCCH monitoring occasion or PDCCH candidates by the SS set configured for the UE partially or entirely overlap SBFD symbols, whether to monitor the PDCCH candidates in the corresponding SBFD symbol may be configured by the base station through higher layer signaling or MAC control element signaling. Alternatively, whether to monitor the PDCCH candidates in the corresponding SBFD symbol may be indicated by the base station through physical layer control signaling.

According to yet another example, the UE may perform monitoring of the downlink control channel only for PDCCH candidates configured in downlink symbols for PDCCH monitoring occasions configured with both downlink symbols and SBFD symbols. Alternatively, unlike this, the UE may perform monitoring of the downlink control channel only for PDCCH candidates configured in SBFD symbols for PDCCH monitoring occasions configured with both downlink symbols and SBFD symbols.

In other words, one PDCCH transmission and the corresponding PDCCH monitoring/reception may be restricted from being performed across different symbol types. Specifically, the base station may avoid transmitting one PDCCH for the UE across SBFD symbols and non-SBFD symbols. Further, the base station may configure the UE not to perform monitoring and corresponding PDCCH reception operation for the corresponding PDCCH candidate when the PDCCH candidate configured according to the control resource set configuration information and search space set configuration information includes both non-SBFD symbols and SBFD symbols. In this case, the UE may be configured to skip monitoring of all PDCCH candidates configured in the corresponding PDCCH monitoring occasion.

Alternatively, among the PDCCH candidates configured in the corresponding PDCCH monitoring occasion, the UE may be configured to perform monitoring for PDCCH candidates configured on a single symbol type and not perform monitoring for only PDCCH candidates configured across different symbol types. In other words, monitoring may be performed for PDCCH candidate(s) including only SBFD symbols or PDCCH candidate(s) including only non-SBFD symbols, and monitoring may be omitted for PDCCH candidates including both SBFD symbols and non-SBFD symbols. In this case, the symbol type to monitor may be configured by the base station or determined by the first symbol type of the corresponding PDCCH monitoring occasion.

As yet another example, the UE may perform monitoring of the downlink control channel by distinguishing between common search space and UE-specific search space for PDCCH monitoring occasions configured with both downlink symbols and SBFD symbols.

In this case, for the common search space, when the PDCCH monitoring occasion includes SBFD symbols, the UE may be configured to skip the corresponding PDCCH monitoring occasion. Alternatively, the UE may be configured to monitor only PDCCH candidates belonging to symbols configured as DL among all PDCCH candidates configured across downlink symbols and SBFD symbols in the corresponding PDCCH monitoring occasion. Alternatively, PDCCH candidates may be reconfigured using only symbols configured as DL among the downlink symbols and SBFD symbols included in the corresponding PDCCH monitoring occasion, so that the UE monitors only the corresponding PDCCH candidates.

In contrast, for the UE-specific search space, the UE may be configured to perform PDCCH monitoring and reception across the corresponding DL symbols and SBFD symbols according to the base station's configuration for symbol types, PDCCH transmission/reception configuration information, etc., or implicitly.

According to yet another example, the UE may perform monitoring of the downlink control channel according to PDCCH reception configuration information based on either downlink symbols or SBFD symbols, or perform monitoring of the downlink control channel according to separately configured PDCCH reception configuration information for PDCCH monitoring occasions configured with both downlink symbols and SBFD symbols. For such configuration, TCI state configuration information, DM-RS scrambling sequence ID information, precoder granularity information, control channel element-to-resource element group (CCE-to-REG) mapping information, etc., included in the PDCCH reception configuration information may be configured separately. Here, the PDCCH reception configuration information is described from the UE perspective, and in the disclosure, may be referred to as PDCCH transmission/reception configuration information, or referred to as PDCCH transmission configuration information from the base station perspective.

Specifically, one control resource set configuration information for the UE may separately include PDCCH reception configuration information for PDCCH transmission and reception through DL symbols and PDCCH reception configuration information for PDCCH transmission and reception through SBFD symbols.

In this case, the UE may be configured to follow PDCCH reception configuration information for either downlink symbols or SBFD symbols according to the base station's configuration or instruction. In other words, it may be configured whether to follow the TCI state configuration information, DM-RS scrambling sequence ID information, precoder granularity information, CCE-to-REG mapping information of DL symbols, or the TCI state configuration information, DM-RS scrambling sequence ID information, precoder granularity information, CCE-to-REG mapping information of SBFD symbols.

Alternatively, for PDCCH monitoring occasions configured with both downlink symbols and SBFD symbols, PDCCH reception configuration information may be configured separately. In other words, in this case, the base station may separately configure PDCCH reception configuration information for PDCCH monitoring, i.e., TCI state configuration information, DM-RS scrambling sequence ID information, precoder granularity information, CCE-to-REG mapping information.

Alternatively, it may be configured to implicitly follow PDCCH reception configuration of a specific symbol type without separate component/instruction from the base station. For example, it may be configured to follow PDCCH transmission/reception configuration according to the first symbol type of the corresponding PDCCH monitoring occasion or PDCCH candidates. Alternatively, it may be configured to follow PDCCH reception configuration according to the last symbol type of the corresponding PDCCH monitoring occasion or PDCCH candidates. Alternatively, it may be configured to follow PDCCH reception configuration of a specific symbol type, e.g., SBFD symbol type. Alternatively, it may be configured to follow PDCCH reception configuration of DL symbol type.

According to the embodiments described above, a downlink control channel may be transmitted and received efficiently within a slot or symbol where full-duplex communication is applied.

FIG. 9 is a flowchart illustrating a method 900 of a base station for transmitting a downlink control channel according to an embodiment. The description related to FIG. 8 may be omitted to avoid redundant description and, in that case, the omitted content may be applied in substantially the same manner to the base station as long as it does not contradict the technical spirit of the invention.

Referring to FIG. 9, the base station may transmit (S910) control resource set configuration information for at least one control resource set (CORESET) for reception of a downlink control channel and transmit (S920) search space set configuration information for at least one search space set (SS set) based on the control resource set configuration information.

For the TDD carrier, some frequency resources may be utilized for uplink transmission of the UE in any DL slot or DL symbol, or may be utilized like a flexible symbol for downlink/uplink transition. Alternatively, some frequency resources in any UL slot or UL symbol may be configured to be utilized for downlink transmission of the base station. For example, when an uplink subband is configured in any DL slot, the uplink subband may be set at the center of the corresponding frequency band or at the edge of the corresponding frequency band. In this case, a guard band may be configured between the uplink subband and the downlink subband (DL subband) in the corresponding slot.

For the reception of a downlink control channel of a UE, the base station may configure up to three control resource sets (CORESETs) per downlink bandwidth part (DL BWP) for the UE. The control resource set configuration information (which is also referred to herein as control resource set setting information or CORESET configuration information) may include frequency and time resource allocation information constituting the CORESET, such as PRB allocation information and consecutive symbol allocation information, DM-RS scrambling sequence ID information, precoder granularity information, control resource element-to-resource element (CCE-to-REG) mapping information, and TCI-state information, along with CORESET index information corresponding to the identification information of the control resource set.

Further, the base station may transmit search space set (SS) configuration information (which may also be referred to as search space set setting information or SS set configuration information in the disclosure) for PDCCH monitoring of the UE to the corresponding UE. The search space set configuration information may include search space set index (SS set index) information, control resource set association (CORESET association) information, PDCCH monitoring period information and offset information, monitoring pattern (symbol) information in PDCCH monitoring slots, duration information, monitoring slot information in a slot group (option), number setting information of PDCCH candidates for each aggregation level (AL), search space type (SS type) information, DCI format setting information, or the like.

Referring back to FIG. 9, the base station may transmit the downlink control channel at one or more PDCCH monitoring occasions determined based on the control resource set configuration information and the search space set configuration information (S930).

The UE performs monitoring on PDCCH candidates in CORESET resources according to the search space set configuration information. However, when the UE is configured or instructed to perform uplink transmission operation through the uplink subband in a DL symbol including the uplink subband (e.g., an SBFD symbol), the UE may not perform PDCCH monitoring operation according to the search space set configuration in the corresponding SBFD symbol. Further, even when the UE performs downlink reception operation through the downlink subband in an SBFD symbol (e.g., the remaining frequency band except for the uplink subband and guard band from the frequency band that may be allocated to the UE), the performance of PDCCH monitoring operation according to the search space set configuration information in the corresponding SBFD symbol may not be valid depending on the presence or extent of an overlap between the configured CORESET resource and the uplink subband resource.

Therefore, when the PDCCH monitoring occasion or PDCCH candidates by the SS set configured for the UE partially or entirely include SBFD symbols, the base station may distinguish between PDCCH monitoring occasions configured with only downlink symbols or SBFD symbols and PDCCH monitoring occasions configured with both downlink symbols and SBFD symbols to transmit the downlink control channel. In other words, the monitoring operation when the time period of the UE's PDCCH monitoring occasion is configured with only downlink symbols or only SBFD symbols and the monitoring operation when the time period of the PDCCH monitoring occasion includes at least one downlink symbol and at least one SBFD symbol may be set separately from each other.

According to an example, the base station may not perform transmission of the downlink control channel for PDCCH monitoring occasions configured with both downlink symbols and SBFD symbols. In other words, the UE may perform monitoring of the downlink control channel only when the time period of the PDCCH monitoring occasion is configured with only downlink symbols or only SBFD symbols. Specifically, when the PDCCH monitoring occasion or PDCCH candidates according to the SS set configured for the UE partially or entirely overlap with SBFD symbols, the UE may be configured to skip monitoring (e.g., blind decoding) of the PDCCH monitoring occasion or PDCCH candidates.

To that end, the UE may be configured to perform PDCCH monitoring only when predetermined conditions are met. For example, when the UE is configured or instructed by the base station to perform uplink transmission operation through the uplink subband in the corresponding SBFD symbol, the UE may be configured to skip monitoring of the PDCCH monitoring occasion or PDCCH candidates according to the SS set configured for the UE.

Alternatively, when the UE is configured or instructed by the base station to perform downlink reception operation in the corresponding SBFD symbol, if the CORESET associated with the corresponding SS set at least partially overlaps the uplink subband or guard band, the UE may be configured to skip PDCCH monitoring. Alternatively, when the UE is configured or instructed by the base station to perform downlink reception operation in the corresponding SBFD symbol, even if the CORESET associated with the corresponding SS set entirely belongs to the downlink subband, the UE may still be configured to skip monitoring of the corresponding PDCCH upon instruction from the base station, the UE may be configured to skip PDCCH monitoring.

According to another example, the base station may configure or instruct whether the UE monitors the downlink control channel for PDCCH monitoring occasions configured with both downlink symbols and SBFD symbols. In other words, when the PDCCH monitoring occasion or PDCCH candidates according to the SS set configured for the UE partially or entirely overlap SBFD symbols, whether to monitor the PDCCH candidates in the corresponding SBFD symbol may be configured by the base station through higher layer signaling or MAC control element signaling. Alternatively, whether to monitor the PDCCH candidates in the corresponding SBFD symbol may be indicated by the base station through physical layer control signaling.

According to yet another example, the base station may transmit the downlink control channel only for PDCCH candidates configured in downlink symbols for PDCCH monitoring occasions configured with both downlink symbols and SBFD symbols. Alternatively, unlike this, the base station may transmit the downlink control channel only for PDCCH candidates configured in SBFD symbols for PDCCH monitoring occasions configured with both downlink symbols and SBFD symbols.

In other words, one PDCCH transmission and the corresponding PDCCH monitoring/reception may be restricted from being performed across different symbol types. Specifically, the base station may avoid transmitting one PDCCH for the UE across SBFD symbols and non-SBFD symbols. Further, the base station may configure the UE not to perform monitoring and corresponding PDCCH reception operation for the corresponding PDCCH candidate when the PDCCH candidate configured according to the control resource set configuration information and search space set configuration information includes both non-SBFD symbols and SBFD symbols. In this case, the UE may be configured to skip monitoring of all PDCCH candidates configured in the corresponding PDCCH monitoring occasion.

Alternatively, among the PDCCH candidates configured in the corresponding PDCCH monitoring occasion, the UE may be configured to perform monitoring for PDCCH candidates configured on a single symbol type and not perform monitoring for only PDCCH candidates configured across different symbol types. In other words, monitoring may be performed for PDCCH candidate(s) including only SBFD symbols or PDCCH candidate(s) including only non-SBFD symbols, and monitoring may be omitted for PDCCH candidates including both SBFD symbols and non-SBFD symbols. In this case, the symbol type to monitor may be configured by the base station or determined by the first symbol type of the corresponding PDCCH monitoring occasion.

As yet another example, the base station may transmit the downlink control channel by distinguishing between common search space and UE-specific search space for PDCCH monitoring occasions configured with both downlink symbols and SBFD symbols.

In this case, for the common search space, when the PDCCH monitoring occasion includes SBFD symbols, the UE may be configured to skip the corresponding PDCCH monitoring occasion. Alternatively, the UE may be configured to monitor only PDCCH candidates belonging to symbols configured as DL among all PDCCH candidates configured across downlink symbols and SBFD symbols in the corresponding PDCCH monitoring occasion. Alternatively, PDCCH candidates may be reconfigured using only symbols configured as DL among the downlink symbols and SBFD symbols included in the corresponding PDCCH monitoring occasion, so that the UE monitors only the corresponding PDCCH candidates.

In contrast, for the UE-specific search space, the UE may be configured to perform PDCCH monitoring and reception across the corresponding DL symbols and SBFD symbols according to the base station's configuration for symbol types, PDCCH transmission/reception configuration information, etc., or implicitly.

According to yet another example, the base station may transmit the downlink control channel according to PDCCH reception configuration information based on either downlink symbols or SBFD symbols or transmit the downlink control channel according to separately configured PDCCH reception configuration information for PDCCH monitoring occasions configured with both downlink symbols and SBFD symbols. To that end, TCI state configuration information, DM-RS scrambling sequence ID information, precoder granularity information, control channel element-to-resource element group (CCE-to-REG) mapping information, etc., included in the PDCCH reception configuration information may be configured separately.

Specifically, one control resource set configuration information for the UE may separately include PDCCH reception configuration information for PDCCH transmission and reception through DL symbols and PDCCH reception configuration information for PDCCH transmission and reception through SBFD symbols.

In this case, the base station may configure or instruct the UE to follow PDCCH reception configuration information for either downlink symbols or SBFD symbols. In other words, it may be indicated or configured whether to follow the TCI state configuration information, DM-RS scrambling sequence ID information, precoder granularity information, CCE-to-REG mapping information of DL symbols, or the TCI state configuration information, DM-RS scrambling sequence ID information, precoder granularity information, CCE-to-REG mapping information of SBFD symbols.

Alternatively, for PDCCH monitoring occasions configured with both downlink symbols and SBFD symbols, PDCCH reception configuration information may be configured separately. In other words, in this case, the base station may separately configure PDCCH reception configuration information for PDCCH monitoring, i.e., TCI state configuration information, DM-RS scrambling sequence ID information, precoder granularity information, CCE-to-REG mapping information.

Alternatively, it may be configured to implicitly follow PDCCH reception configuration of a specific symbol type without explicit configuration or instruction from the base station. For example, it may be configured to follow PDCCH transmission/reception configuration according to the first symbol type of the corresponding PDCCH monitoring occasion or PDCCH candidates. Alternatively, it may be configured to follow PDCCH reception configuration according to the last symbol type of the corresponding PDCCH monitoring occasion or PDCCH candidates. Alternatively, it may be configured to follow PDCCH reception configuration of a specific symbol type, e.g., SBFD symbol type. Alternatively, it may be configured to follow PDCCH reception configuration of DL symbol type.

According to the embodiments described above, a downlink control channel may be transmitted and received efficiently within a slot or symbol where full-duplex communication is applied.

Hereinafter, more embodiments related to the method for transmitting/receiving a downlink control channel in full-duplex communication are described in detail with reference to related drawings.

The disclosure proposes a method for configuring downlink control channel transmission/reception resources for a UE in any base station/cell where an uplink (UL) subband or downlink (DL) subband configuration has been made to support full-duplex communication in a wireless mobile communication system.

Time division duplex (TDD) is a duplexing method widely used in commercial new radio (NR), i.e., 5G mobile communication systems. In TDD, time-domain radio resources are divided into downlink slots and uplink slots, and downlink slots are usually distributed at a higher ratio than uplink slots according to the distribution ratio of uplink traffic and downlink traffic. However, this limitation of the uplink slot negatively affects coverage and latency. Full-duplex communication may be applied as a technology for addressing such issues.

Specifically, full-duplex communication is a technique in which a gNB (e.g., a base station) simultaneously performs DL transmission and UL reception in the same radio resource. The UE side may simultaneously perform DL reception and UL transmission as well. In other words, both the base station and the UE may support full duplex. However, unlike the base station, for which self-interference cancellation is structurally easy, in the UE, DL reception performance is prone to be affected by self-interference of UL transmission signals. Therefore, it is generally considered that the base station operates in full-duplex communication and the UE operates in half-duplex communication. Further, a non-overlapping subband full duplex method where the base station reduce self-interference by using separate frequency resources for simultaneous DL transmission and UL reception instead of using the same resource.

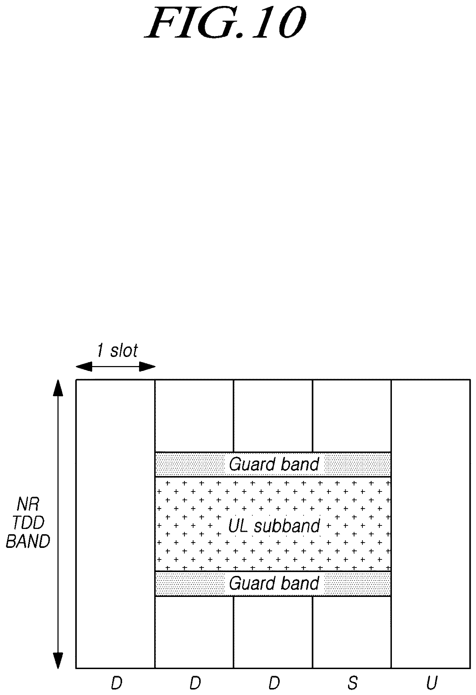

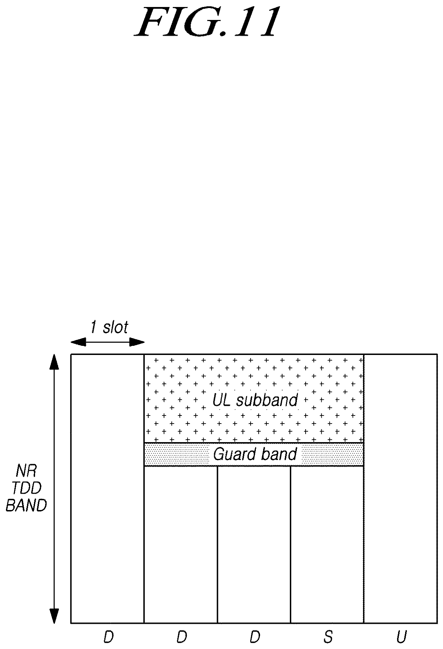

In other words, FIGS. 10 and 11 illustrate an example in which DL slots and UL slots are configured in a ratio of 4:1 in any NR frequency band. However, some symbols of the last DL slot may be a special slot including a flexible symbol for DL/UL transition. As described above, when a time division duplex (TDD) configuration is implemented, an uplink subband for supporting UL transmission of the UE may be configured in some (or all) DL slots of the corresponding DL slots. When the UL subband is set in any DL slot, the UL subband may be configured in the center of the corresponding frequency band as shown in FIG. 10. Or the UL subband may be configured at the edge of the corresponding frequency band as shown in FIG. 11. In this case, a guard band may be configured between the UL subband and the downlink subband (DL subband) in the corresponding slot.

The disclosure proposes a method for configuring a BWP when any base station/network supports non-overlapping subband full duplex and accordingly transmitting/receiving radio channels (e.g., PDCCH/PDSCH and PUSCH/PUCCH) and uplink/downlink radio signals (DM-RS, CSI-RS, SRS, and PSS/SSS) of the base station and the UE. However, the description of the disclosure may be substantially identically applied to other various full-duplex application scenarios. For example, the full duplex application scenario may include a full duplex operation in an unpaired spectrum and a full duplex operation in a downlink (DL) frequency band or an uplink (UL) frequency band of a paired spectrum. Further, as described above, the description of the disclosure may be substantially identically applied to a scenario in which non-overlapping subband full duplex or pure full duplex (i.e., DL transmission and UL reception simultaneously in the same frequency resource) is supported only on the base station side, and a half duplex operation is performed in the UE. Further, the description of the disclosure may be substantially identically applied even when not only the base station but also the UE supports non-overlapping subband full duplex or pure full duplex.

The uplink-downlink (UL-DL) slot configuration defined in NR is defined to be performed in units of cells through cell-specific RRC signaling. In other words, patterns of DL symbols, UL symbols, and flexible symbols of a predetermined period are configured through the RRC message 'tdd-UL-DL-ConfigurationCommon' for the corresponding UL-DL slot configuration. Additionally, through 'tdd-UL-DL-ConfigurationDedicated' which is UE-specific RRC signaling, only flexible symbols configured through the 'tdd-UL-DL-ConfigurationCommon' may be reallocated as UL symbols, DL symbols, or flexible symbols for each UE. Or, a method for indicating a dynamic slot format through a UE-group common PDCCH has also been defined. To that end, NR also supports a slot format indication method in a dynamic form through DCI format 2_0.

According to the above-described slot configuration method, any one symbol may be configured or indicated as one of DL, UL, or Flexible. FIG. 10 illustrates an example in which any slot format is set as DDDSU through the typical slot configuration. D is a down link slot, which means that all OFDM symbols constituting the corresponding slot are set as DL. U is an uplink slot, which means that all OFDM symbols constituting the corresponding slot are set as UL. S is a special slot, which means a slot including a flexible symbol for DL/UL transition. In general, the special slot may be composed of 12 DL symbols and 2 flexible symbols out of a total of 14 symbols for a normal CP. Alternatively, it may be composed of 10 DL symbols, 2 flexible symbols, and 2 UL symbols. In other words, within any one TDD carrier, one symbol was set or indicated as only one of DL, UL, or flexible.

However, when the UL subband is configured in any DL slot as shown in FIGS. 10 and 11, DL transmission or UL reception may occur simultaneously for each frequency resource in the corresponding symbol. As described above, a DL slot or symbol including a UL subband or a UL slot or symbol including a DL subband is referred to as an SBFD slot or an SBFD symbol in the disclosure.

In the NR system, the base station may configure up to three CORESETs per downlink bandwidth part (DL BWP) for any UE for allocation of radio resources for PDCCH reception of the UE. Each piece of CORESET configuration information may include, e.g., frequency and time resource allocation information constituting the CORESET (i.e., PRB allocation information and consecutive symbol allocation information), DM-RS scrambling sequence ID information, precoder granularity information, CCE-to-REG mapping information, and TCI-state information, along with CORESET index information corresponding to the identification information of the CORESET.

Further, the base station transmits search space (SS) set configuration information for PDCCH monitoring of any UE to the corresponding UE. The SS set configuration information may include SS set index information, CORESET association information, PDCCH monitoring period information and offset information, monitoring pattern (symbol) information in PDCCH monitoring slots, duration information, monitoring slot information in a slot group (option), number setting information of PDCCH candidates for each aggregation level (AL), search space type (SS type) information, DCI format setting information, or the like.

The UE performs monitoring on PDCCH candidates in the CORESET resources according to the SS set configuration information.

However, when any UE is configured or instructed to perform uplink transmission operation through the UL subband in a DL symbol including the UL subband (e.g., an SBFD symbol), the UE may not perform PDCCH monitoring operation according to the SS set configuration for the corresponding SBFD symbol. Alternatively, even when any UE performs DL reception operation through the DL subband (i.e., the remaining frequency band except for the UL subband and guard band in FIGS. 10 and 11) in the corresponding SBFD symbol, the performance of PDCCH monitoring operation according to the SS set configuration information in the corresponding SBFD symbol may not be valid depending on the presence or extent of overlap between the configured CORESET resource and UL subband resource.

Accordingly, the disclosure proposes an operation method of a UE at a corresponding PDCCH monitoring occasion when the PDCCH monitoring occasion included in the SS set configuration information for any SS set configured for any UE partially or entirely includes SBFD symbols. Here, the PDCCH monitoring occasion refers to one SS constituted of PDCCH candidates for each AL configured through the associated CORESET at any symbol of any slot determined by PDCCH monitoring period information and offset information, monitoring pattern (symbol) information in the PDCCH monitoring slot, duration information, monitoring slot information in the slot group, etc., included in the SS set configuration information.

When any PDCCH monitoring occasion by the SS set configured for any UE or any PDCCH candidates accordingly partially or entirely include SBFD symbols, the corresponding UE may be configured to determine monitoring operation for the corresponding PDCCH monitoring occasion or the corresponding PDCCH candidates as follows.

Specifically, when any PDCCH monitoring occasion or PDCCH candidates according to any SS set configured for any UE partially or entirely overlap SBFD symbols, the corresponding UE may be implicitly configured to skip monitoring (i.e., blind decoding) of the corresponding PDCCH monitoring occasion or PDCCH candidates when the following conditions are met.

1. For the case where the UE is configured or instructed by the base station to perform UL transmission operation through the UL subband in the corresponding SBFD symbols,

2. and the case where the UE is configured or instructed by the base station to perform DL reception in the corresponding SBFD symbols,

2-1. if the corresponding SS set and associated CORESET partially or fully overlap the UL subband or guard band,

Alternatively, the following condition may additionally be defined.

2. For the case where the UE is configured or instructed to perform DL reception in the corresponding SBFD symbols,

2-2. when the corresponding SS set and associated CORESET fully belong to the DL subband, and the base station supports configuring or instructing whether to monitor or skip monitoring for the corresponding PDCCH, and the UE is configured or instructed to skip monitoring accordingly.

As another method for determining whether to perform UE PDCCH monitoring for the PDCCH monitoring occasion for any UE or PDCCH candidates thereof, it may be configured or instructed by the base station. In other words, when any PDCCH monitoring occasion or PDCCH candidates, by any SS set configured for any UE in the base station, fully or partially overlap the SBFD symbols, the base station may configure or instruct whether the UE monitors the PDCCH candidates in the SBFD symbols.

As another method of defining the PDCCH monitoring operation of the UE in the SBFD symbols, it may be configured for the base station to configure and transmit separate SS set configuration information for the same SS set in the DL symbols and SBFD symbols. For example, it may be configured to separately transmit associated CORESET information for DL symbols and separate associated CORESET information for SBFD symbols for any SS set. Alternatively, it may be configured to transmit AL-specific PDCCH candidates configuration information for DL symbols and separate AL-specific PDCCH candidates configuration information for SBFD symbols.

In the disclosure, the "base station configures" means that the base station transmits the corresponding configuration information through UE-specific or cell-specific or UE group common higher layer signaling or medium access control (MAC) control element (CE) signaling. The "base station indicates" means that the base station transmits the corresponding indication information through UE-specific or UE group common or cell-specific physical layer control signaling (L1 control signaling).

Hereinafter, based on the above-described content, when DL reception operation in any UE is performed through DL BWP of symbols configured/indicated as DL and the DL subband of symbols configured/indicated as SBFD symbols, PDCCH monitoring and PDCCH reception operation through the corresponding DL symbols and SBFD symbols are described more specifically.

### Embodiment 1: A method that does not support PDCCH transmission/reception through different symbol types

As a method of PDCCH transmission by the base station and the corresponding PDCCH monitoring/reception by the UE, it may be restricted so that one PDCCH transmission and the corresponding PDCCH monitoring/reception do not occur across different symbol types. In other words, in transmitting one PDCCH for any UE and accordingly in monitoring and receiving the base station's PDCCH transmission by the UE, it may be assumed that one PDCCH transmission does not occur across different symbol types (i.e., the above-described SBFD symbols and non-SBFD symbols). In other words, the base station may prevent the transmission of one PDCCH for any UE across SBFD symbols and non-SBFD symbols.

Further, in monitoring any PDCCH candidate configured according to the CORESET configuration information and SS set configuration information, when the corresponding PDCCH candidate includes both non-SBFD symbols and SBFD symbols, it may configured for the UE to skip monitoring and corresponding PDCCH reception for the corresponding PDCCH candidate. In this case, according to the SS set configuration information configured for any UE, when any PDCCH monitoring occasion by the SS set configuration information includes both non-SBFD symbols and SBFD symbols, the UE may be configured to skip monitoring for all PDCCH candidates configured in the corresponding PDCCH monitoring occasion.

Alternatively, among the PDCCH candidates configured in the corresponding PDCCH monitoring occasion, monitoring may be performed for PDCCH candidates configured on a single symbol type, and monitoring may be skipped only for PDCCH candidates configured across different symbol types. In other words, monitoring may be performed only for PDCCH candidate(s) including only SBFD symbols or PDCCH candidates including only non-SBFD symbols, and monitoring may not be performed for PDCCH candidate(s) including both SBFD symbols and non-SBFD symbols.

Alternatively, monitoring may be performed only for PDCCH candidates configured on a specific symbol type among the PDCCH candidates configured in the corresponding PDCCH monitoring occasion, and monitoring may be skipped for the other PDCCH candidates (i.e., PDCCH candidates including some or all of other symbol types).

Embodiments of a CORESET configuration method and an SS set configuration method based on the above-described base station PDCCH transmission method and UE PDCCH monitoring/reception operation are described below in detail.

As a method for this, the base station may separately configure the CORESET for SBFD symbols and the CORESET for non-SBFD symbols when configuring the CORESET for PDCCH reception by the UE. In this case, the symbol type on which the PDCCH candidate monitoring according to the corresponding SS set may be determined depending on whether the associated CORESET according to the controlResourceSetId configuration information of any SS set is for SBFD symbols or for non-SBFD symbols. In other words, when the associated CORESET of any SS set is for SBFD symbols, when any PDCCH monitoring occasion according to the SS set configuration information includes some or all of non-SBFD symbols, the UE may be configured to skip monitoring of all PDCCH candidates of the corresponding PDCCH monitoring occasion or to monitor only the PDCCH candidates including only SBFD symbols according to the monitoring method.

As a method for separately configuring the CORESET for SBFD symbols and the CORESET for non-SBFD symbols, the base station may include symbol type configuration information indicating the applicable symbol type for the CORESET configuration when configuring the CORESET for any UE. In other words, the CORESET configuration information for any UE may include an information area for setting whether the corresponding CORESET is for PDCCH reception and monitoring in non-SBFD symbols or for PDCCH reception and monitoring in SBFD symbols.

As another method, for the legacy CORESET for non-SBFD symbols, it may be configured through the legacy RRC message format based on the DL BWP configuration as in typical methods, and separately, the CORESET configuration for SBFD symbols may be configured based on a new RRC message format based on the DL subband configuration. In this case, the CORESET for SBFD symbols may enable configuration of the frequency resources for the CORESET for SBFD symbols based on the frequency resources of the DL subband, not the frequency resources of the DL BWP.

As another method, when configuring any CORESET, it may be configured to include parameter configuration information for SBFD symbols in addition to the parameter configuration for legacy non-SBFD symbols when configuring some information areas. In other words, in one piece of CORESET configuration information, the whole or part of the information area may include each of a setting value for non-SBFD symbols and a setting value for separate SBFD symbols.

As another method, an SS set for SBFD symbols may be configured separately from the SS set for non-SBFD symbols. In this case, when any PDCCH monitoring occasion according to the SS set configuration information for non-SBFD symbols includes some or all of the SBFD symbols, the UE is configured to skip monitoring for all PDCCH candidates of the corresponding PDCCH monitoring occasion according to the PDCCH monitoring and reception method described above. Alternatively, monitoring may be performed only for PDCCH candidates configured only on non-SBFD symbols among all PDCCH candidates configured in the corresponding PDCCH monitoring occasion.

Similarly, when any PDCCH monitoring occasion according to the SBFD symbol target SS set configuration information includes some or all non-SBFD symbols, the UE is configured to skip monitoring of all PDCCH candidates configured in the corresponding PDCCH monitoring occasion. Alternatively, monitoring may be configured to be performed only for PDCCH candidates configured only on SBFD symbols among all PDCCH candidates configured in the corresponding PDCCH monitoring occasion.

As described above, as a method for separately configuring the SS set for non-SBFD symbols and the SS set for SBFD symbols, the base station may include type configuration information of the corresponding SS set when configuring the SS set for any UE. In this case, the corresponding SS set type configuration information may include a configuration of whether the corresponding SS set is a non-SBFD SS set or an SBFD SS set. Alternatively, it may be implicitly determined whether the corresponding SS set is for SBFD symbols or for non-SBFD symbols according to the CORESET associated with the corresponding SS set.

Alternatively, without distinguishing CORESET configuration or SS set configuration according to symbol type, whether PDCCH monitoring and reception on SBFD symbols is performed may be implicitly determined by the frequency resource configuration information of the CORESET. As a method for this, only when the frequency resources of the corresponding CORESET completely belong to a DL subband, the corresponding CORESET may be determined as an available CORESET for SBFD symbols. When some or all frequency resources overlap a UL subband and/or a guard band, the corresponding CORESET may be considered an unavailable CORESET on SBFD symbols.

Therefore, when all (or some) symbols of any PDCCH monitoring occasion according to any SS set configuration information are SBFD symbols, and the associated CORESET of the corresponding SS set is a valid CORESET on SBFD symbols, the UE may perform PDCCH monitoring in the corresponding PDCCH monitoring occasion. Otherwise (i.e., when it is an invalid CORESET on SBFD symbols, or when none of the symbols are SBFD symbols), the UE may be configured to skip PDCCH monitoring in the corresponding PDCCH monitoring occasion.

Alternatively, for any CORESET, a partially available CORESET on SBFD symbols may be defined. In other words, when the frequency resource allocation information of the corresponding CORESET belongs to some DL subband frequency resources, i.e., when any CORESET and DL subband partially overlap on the frequency axis, only for the partial PRBs overlapping the DL subband among the frequency resources constituting the corresponding CORESET (i.e., the PRBs constituting the corresponding CORESET), i.e., only for the partial PRBs set among all PRBs constituting the corresponding CORESET, it may be defined as an available partial CORESET on SBFD symbols. In this case, when any PDCCH monitoring occasion by any SS set includes SBFD symbols, the UE may be configured to monitor only the PDCCH candidates belonging to the corresponding available partial CORESET on the corresponding SBFD symbols.

### Embodiment 2 A method for configuring/indicating, by base station, whether to support PDCCH transmission and reception through different symbol types or whether to transmit and receive PDCCH through different symbol types

As another method of PDCCH transmission of the base station and the corresponding PDCCH monitoring/reception of the UE, it may be configured to support PDCCH transmission and the corresponding PDCCH monitoring/reception through different symbol types for any UE at the base station. Alternatively, it may be explicitly or implicitly configured whether to support PDCCH transmission/reception through the corresponding different symbol types.

As a method for this, the base station may transmit PDCCH transmission support configuration information through different symbol types for any UE through UE-specific or cell-specific RRC signaling, or may indicate it through MAC CE signaling, L1 control signaling.

When it is configured/instructed to support PDCCH transmission through different symbol types, or when it is configured to support PDCCH transmission and reception through different symbol types, any UE supporting SBFD operation is configured to perform monitoring and the corresponding PDCCH reception for any PDCCH candidates configured across different symbol types according to the CORESET configuration information and SS set configuration information. In other words, the UE is configured to perform monitoring and the corresponding PDCCH reception operation for PDCCH candidates including both non-SBFD symbols and SBFD symbols. However, in this case, only when any PDCCH monitoring occasion configured across DL symbols and SBFD symbols according to the corresponding CORESET configuration and SS set configuration is valid (i.e., as described above, when all PRBs constituting the CORESET belong to the DL subband), or when some PDCCH candidates of the corresponding PDCCH monitoring occasion are valid (i.e., in the case of the partial available CORESET), it may be configured to support PDCCH monitoring and reception across the DL symbols and SBFD symbols only for the corresponding valid PDCCH monitoring occasion or valid subset of PDCCH candidates.

However, when PDCCH transmission/reception through different symbol types is performed as described above, it may be defined differently from the transmission/reception method configuration for PDCCH transmission and reception through a single symbol type. For example, separate TCI state configuration information, DM-RS scrambling sequence ID information, precoder granularity information, CCE-to-REG mapping information, etc., may vary. Specifically, as described above, one piece of CORESET configuration information for any UE may separately include {TCI state configuration information, DM-RS scrambling sequence ID information, precoder granularity information, CCE-to-REG mapping information} for PDCCH transmission and reception through DL symbols and {TCI state configuration information, DM-RS scrambling sequence ID information, precoder granularity information, CCE-to-REG mapping information} for PDCCH transmission and reception through SBFD symbols. In this case, when any PDCCH transmission includes both DL symbols and SBFD symbols, the UE needs to determine which of the above configuration sets to perform PDCCH monitoring.

As a method for this, when both SBFD and DL symbols are included at the base station, PDCCH transmission/reception configuration information for PDCCH monitoring, i.e., {TCI state configuration information, DM-RS scrambling sequence ID information, precoder granularity information, CCE-to-REG mapping information}, may be separately configured. Alternatively, it may be configured to follow the PDCCH transmission/reception configuration information of a specific symbol. In other words, e.g., it may be configured whether to follow {TCI state configuration information, DM-RS scrambling sequence ID information, precoder granularity information, CCE-to-REG mapping information} of DL symbols, or {TCI state configuration information, DM-RS scrambling sequence ID information, precoder granularity information, CCE-to-REG mapping information} of SBFD symbols.

Alternatively, without separate configuration/instruction from the base station, it may be implicitly configured to follow the PDCCH transmission/reception configuration of a specific symbol type. For example, it may be configured to follow the PDCCH transmission/reception configuration according to the first symbol type of the corresponding PDCCH monitoring occasion or PDCCH candidates. Alternatively, it may be configured to follow the PDCCH transmission/reception configuration according to the last symbol type of the corresponding PDCCH monitoring occasion or PDCCH candidates. Alternatively, it may be configured to follow the PDCCH transmission/reception configuration of a specific symbol type, e.g., the SBFD symbol type. Alternatively, it may be configured to follow the PDCCH transmission/reception configuration of the DL symbol type.

Further, the above-described PDCCH monitoring method may be applied differently according to the SS type. As a method for this, different PDCCH monitoring methods may be applied to common search space and UE-specific search space. For example, in the case of a common search space, when any PDCCH monitoring occasion includes SBFD symbols, the PDCCH monitoring occasion may be skipped, or it may be configured to monitor only the PDCCH candidates belonging to symbols set as DL among all the PDCCH candidates configured across DL symbols and SBFD symbols in the PDCCH monitoring occasion. Alternatively, it may be configured to monitor only the PDCCH candidates by reconstructing the PDCCH candidates only through symbols set as DL among DL symbols and SBFD symbols that constitute the PDCCH monitoring occasion. On the other hand, in the case of a UE-specific search space, it may be configured to perform PDCCH monitoring and reception across the DL symbols and SBFD symbols according to the above-described embodiment 2, either by configuration from the base station or implicitly.

Alternatively, even in the case of a common search space, different PDCCH monitoring methods may be applied according to specific CSS types. In other words, different PDCCH monitoring methods may be applied for different types of CSSs, such as type-0 CSS, type-1 CSS, and type-2 CSS.

All examples constituted by combinations of the above-described embodiments 1 and 2 are included in the scope of the invention according to the disclosure.

Hereinafter, configurations of a UE and a base station that may implement all or some of the embodiments described above in connection with FIGS. 1 to 11 are described with reference to the drawings. The above-described description may be omitted to avoid repetition. The omitted content may still be understood to apply in substantially the same manner to the following description, provided that it does not depart from the technical spirit of the invention.

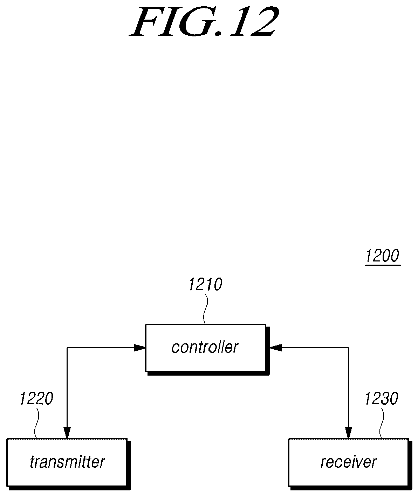

FIG. 12 is a block diagram illustrating a user equipment (UE) 1200 according to an embodiment.

Referring to FIG. 12, a UE 1200 according to an embodiment includes a transmitter 1220, a receiver 1230, and a controller 1210 controlling operations of the transmitter and the receiver.

The controller 1210 controls the overall operation of the UE 1200 according to the method for receiving a downlink control channel in full-duplex communication required to the embodiments described above.

The controller 1210 may receive control resource set configuration information for at least one control resource set (CORESET) for reception of a downlink control channel. Further, the controller 1210 may receive search space set configuration information for at least one search space set (SS set) based on the control resource set configuration information.

For the reception of a downlink control channel of a UE, up to three control resource sets (CORESETs) may be configured per downlink bandwidth part (DL BWP) for the UE. The control resource set configuration information may include frequency and time resource allocation information constituting the CORESET, such as PRB allocation information and consecutive symbol allocation information, DM-RS scrambling sequence ID information, precoder granularity information, control resource element-to-resource element (CCE-to-REG) mapping information, and TCI-state information, along with CORESET index information corresponding to the identification information of the control resource set.

Further, the controller 1210 may receive search space set (SS set) configuration information for PDCCH monitoring of the UE from the base station. The search space set configuration information may include search space set index (SS set index) information, control resource set association (CORESET association) information, PDCCH monitoring period information and offset information, monitoring pattern (symbol) information in PDCCH monitoring slots, duration information, monitoring slot information in a slot group (option), number setting information of PDCCH candidates for each aggregation level (AL), search space type (SS type) information, DCI format setting information, or the like.

The controller 1210 may monitor the downlink control channel at one or more PDCCH monitoring occasions determined based on the control resource set configuration information and the search space set configuration information.

The controller 1210 performs monitoring on PDCCH candidates in CORESET resources according to the search space set configuration information. However, when the UE is configured or instructed to perform uplink transmission operation through the uplink subband in a DL symbol including the uplink subband (e.g., an SBFD symbol), the controller 1210 may not perform PDCCH monitoring operation according to the search space set configuration in the corresponding SBFD symbol. Further, even when the UE performs downlink reception operation through the downlink subband in an SBFD symbol (e.g., the remaining frequency band except for the uplink subband and guard band from the frequency band that may be allocated to the UE), the performance of PDCCH monitoring operation according to the search space set configuration information in the corresponding SBFD symbol may not be valid depending on the presence or extent of overlap between the configured CORESET resource and the uplink subband resource.

Therefore, when the PDCCH monitoring occasion or PDCCH candidates by the SS set configured for the UE partially or entirely include SBFD symbols, the controller 1210 may distinguish between PDCCH monitoring occasions configured with only downlink symbols or SBFD symbols and PDCCH monitoring occasions configured with both downlink symbols and SBFD symbols to perform monitoring of the downlink control channel. In other words, the monitoring operation when the time period of the PDCCH monitoring occasion is configured with only downlink symbols or only SBFD symbols and the monitoring operation when the time period of the PDCCH monitoring occasion includes at least one downlink symbol and at least one SBFD symbol may be set separately from each other.

According to an example, the controller 1210 may skip monitoring of the downlink control channel for PDCCH monitoring occasions configured with both downlink symbols and SBFD symbols. In other words, the controller 1210 may perform monitoring of the downlink control channel only when the time period of the PDCCH monitoring occasion is configured with only downlink symbols or only SBFD symbols. Specifically, when the PDCCH monitoring occasion or PDCCH candidates according to the SS set configured for the UE partially or entirely overlap SBFD symbols, the UE may be configured to skip monitoring of the PDCCH monitoring occasion or PDCCH candidates.

To that end, the UE may be configured to perform PDCCH monitoring only when predetermined conditions are met. For example, when the UE is configured or instructed by the base station to perform uplink transmission operation through the uplink subband in the corresponding SBFD symbol, the controller 1210 may be configured to skip monitoring of the PDCCH monitoring occasion or PDCCH candidates according to the SS set configured for the UE.

Alternatively, when the UE is configured or instructed by the base station to perform downlink reception operation in the corresponding SBFD symbol, if the CORESET associated with the corresponding SS set at least partially overlaps the uplink subband or guard band, the controller 1210 may be configured to skip PDCCH monitoring. Alternatively, when the UE is configured or instructed by the base station to perform downlink reception operation in the corresponding SBFD symbol, even when the CORESET associated with the corresponding SS set entirely belongs to the downlink subband, if the base station configures or instructs the UE to skip monitoring of the corresponding PDCCH, the controller 1210 may be configured to skip PDCCH monitoring.

According to another example, the controller 1210 may perform monitoring of the downlink control channel for PDCCH monitoring occasions configured with both downlink symbols and SBFD symbols according to whether monitoring of the downlink control channel is configured or instructed by the base station. In other words, when the PDCCH monitoring occasion or PDCCH candidates by the SS set configured for the UE partially or entirely overlap SBFD symbols, whether to monitor the PDCCH candidates in the corresponding SBFD symbol may be configured by the base station through higher layer signaling or MAC control element signaling. Alternatively, whether to monitor the PDCCH candidates in the corresponding SBFD symbol may be indicated by the base station through physical layer control signaling.

According to yet another example, the controller 1210 may perform monitoring of the downlink control channel only for PDCCH candidates configured in downlink symbols for PDCCH monitoring occasions configured with both downlink symbols and SBFD symbols. Alternatively, unlike this, the controller 1210 may perform monitoring of the downlink control channel only for PDCCH candidates configured in SBFD symbols for PDCCH monitoring occasions configured with both downlink symbols and SBFD symbols.

In other words, one PDCCH transmission and the corresponding PDCCH monitoring/reception may be restricted from being performed across different symbol types. Specifically, the base station may avoid transmitting one PDCCH for the UE across SBFD symbols and non-SBFD symbols. Further, the base station may configure the UE not to perform monitoring and corresponding PDCCH reception operation for the corresponding PDCCH candidate when the PDCCH candidate configured according to the control resource set configuration information and search space set configuration information includes both non-SBFD symbols and SBFD symbols. In this case, the controller 1210 may be configured to skip monitoring of all PDCCH candidates configured in the corresponding PDCCH monitoring occasion.

Alternatively, among the PDCCH candidates configured in the corresponding PDCCH monitoring occasion, the controller 1210 may be configured to perform monitoring for PDCCH candidates configured on a single symbol type and not perform monitoring for only PDCCH candidates configured across different symbol types. In this case, the symbol type to monitor may be configured by the base station or determined by the first symbol type of the corresponding PDCCH monitoring occasion.

As yet another example, the controller 1210 may perform monitoring of the downlink control channel by distinguishing between common search space and UE-specific search space for PDCCH monitoring occasions configured with both downlink symbols and SBFD symbols.

In this case, for the common search space, when the PDCCH monitoring occasion includes SBFD symbols, the controller 1210 may be configured to skip the corresponding PDCCH monitoring occasion. Alternatively, the controller 1210 may be configured to monitor only PDCCH candidates belonging to symbols configured as DL among all PDCCH candidates configured across downlink symbols and SBFD symbols in the corresponding PDCCH monitoring occasion. Alternatively, PDCCH candidates may be reconfigured using only symbols configured as DL among the downlink symbols and SBFD symbols included in the corresponding PDCCH monitoring occasion, so that the UE monitors only the corresponding PDCCH candidates.

Unlike this, for the UE-specific search space, the UE may be configured to perform PDCCH monitoring and reception across the corresponding DL symbols and SBFD symbols according to the base station's configuration for symbol types, PDCCH transmission/reception configuration information, etc., or implicitly.

According to yet another example, the controller 1210 may perform monitoring of the downlink control channel according to PDCCH reception configuration information based on either downlink symbols or SBFD symbols, or perform monitoring of the downlink control channel according to separately configured PDCCH reception configuration information for PDCCH monitoring occasions configured with both downlink symbols and SBFD symbols. To that end, TCI state configuration information, DM-RS scrambling sequence ID information, precoder granularity information, control channel element-to-resource element group (CCE-to-REG) mapping information, etc., included in the PDCCH reception configuration information may be configured separately.

Specifically, one control resource set configuration information for the UE may separately include PDCCH reception configuration information for PDCCH transmission and reception through DL symbols and PDCCH reception configuration information for PDCCH transmission and reception through SBFD symbols.

In this case, the controller 1210 may be configured to follow PDCCH reception configuration information for either downlink symbols or SBFD symbols according to the base station's configuration or instruction.

Alternatively, for PDCCH monitoring occasions configured with both downlink symbols and SBFD symbols, PDCCH reception configuration information may be configured separately.

Alternatively, it may be configured to implicitly follow PDCCH reception configuration of a specific symbol type without separate configuration or instruction from the base station. Alternatively, it may be configured to follow PDCCH reception configuration of a specific symbol type, e.g., SBFD symbol type. Alternatively, it may be configured to follow PDCCH reception configuration of DL symbol type.

According to the embodiments described above, a downlink control channel may be transmitted and received efficiently within a slot or symbol where full-duplex communication is applied.

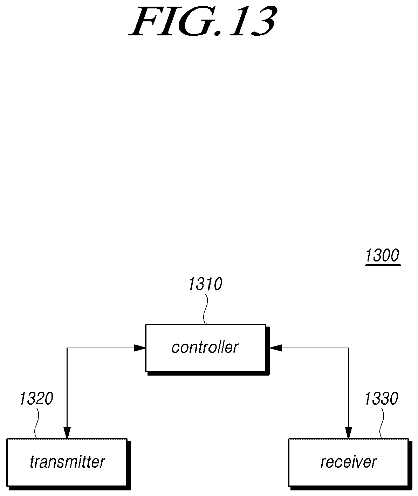

FIG. 13 is a block diagram illustrating a base station 1300 according to an embodiment.

Referring to FIG. 13, a base station 1300 according to another embodiment includes a transmitter 1320, a receiver 1330, and a controller 1310 controlling operations of the transmitter and the receiver.

The controller 1310 controls the overall operation of the base station 1300 according to the method for transmitting a downlink control channel in full-duplex communication required to the embodiments described above. The transmitter 1320 transmits downlink control information and data or messages to the UE via a corresponding channel. The receiver 1330 receives uplink control information and data or messages from the UE via a corresponding channel.

The controller 1310 may transmit control resource set configuration information for at least one control resource set (CORESET) for reception of a downlink control channel. Further, the controller 1310 may transmit search space set configuration information for at least one search space set (SS set) based on the control resource set configuration information.

For the reception of a downlink control channel of a UE, the controller 1310 may configure up to three control resource sets (CORESETs) per downlink bandwidth part (DL BWP) for the UE. The control resource set configuration information may include frequency and time resource allocation information constituting the CORESET, such as PRB allocation information and consecutive symbol allocation information, DM-RS scrambling sequence ID information, precoder granularity information, control resource element-to-resource element (CCE-to-REG) mapping information, and TCI-state information, along with CORESET index information corresponding to the identification information of the control resource set.

Further, the controller 1310 may transmit search space set (SS set) configuration information for PDCCH monitoring of the UE. The search space set configuration information may include search space set index (SS set index) information, control resource set association (CORESET association) information, PDCCH monitoring period information and offset information, monitoring pattern (symbol) information in PDCCH monitoring slots, duration information, monitoring slot information in a slot group (option), number setting information of PDCCH candidates for each aggregation level (AL), search space type (SS type) information, DCI format setting information, or the like.

The controller 1310 may transmit the downlink control channel at one or more PDCCH monitoring occasion determined based on the control resource set configuration information and the search space set configuration information.

The UE performs monitoring on PDCCH candidates in CORESET resources according to the search space set configuration information. However, when the UE is configured or instructed to perform uplink transmission operation through the uplink subband in a DL symbol including the uplink subband, i.e., an SBFD symbol, the UE may not perform PDCCH monitoring operation according to the search space set configuration in the corresponding SBFD symbol. Further, even when the UE performs downlink reception operation through the downlink subband in an SBFD symbol, i.e., the remaining frequency band except for the uplink subband and guard band from the frequency band that may be allocated to the UE, the performance of PDCCH monitoring operation according to the search space set configuration information in the corresponding SBFD symbol may not be valid depending on the presence or extent of overlap between the configured CORESET resource and the uplink subband resource.

Therefore, when the PDCCH monitoring occasion or PDCCH candidates by the SS set configured for the UE partially or entirely include SBFD symbols, the controller 1310 may distinguish between PDCCH monitoring occasions configured with only downlink symbols or SBFD symbols and PDCCH monitoring occasions configured with both downlink symbols and SBFD symbols to transmit the downlink control channel. In other words, the monitoring operation when the time period of the UE's PDCCH monitoring occasion is configured with only downlink symbols or only SBFD symbols and the monitoring operation when the time period of the PDCCH monitoring occasion includes at least one downlink symbol and at least one SBFD symbol may be set separately from each other.

According to an example, the controller 1310 may not perform transmission of the downlink control channel for PDCCH monitoring occasions configured with both downlink symbols and SBFD symbols. In other words, the UE may perform monitoring of the downlink control channel only when the time period of the PDCCH monitoring occasion is configured with only downlink symbols or only SBFD symbols. Specifically, when the PDCCH monitoring occasion or PDCCH candidates according to the SS set configured for the UE partially or entirely overlap SBFD symbols, the UE may be configured to skip monitoring, i.e., blind decoding, of the PDCCH monitoring occasion or PDCCH candidates.

To that end, the UE may be configured to perform PDCCH monitoring only when predetermined conditions are met. For example, when the UE is configured or instructed by the base station to perform uplink transmission operation through the uplink subband in the corresponding SBFD symbol, the UE may be configured to skip monitoring of the PDCCH monitoring occasion or PDCCH candidates according to the SS set configured for the UE.

Alternatively, when the UE is configured or instructed by the base station to perform downlink reception operation in the corresponding SBFD symbol, if the CORESET associated with the corresponding SS set at least partially overlaps the uplink subband or guard band, the UE may be configured to skip PDCCH monitoring. Alternatively, when the UE is configured or instructed by the base station to perform downlink reception operation in the corresponding SBFD symbol, even when the CORESET associated with the corresponding SS set entirely belongs to the downlink subband, if the base station configures or instructs the UE to skip monitoring of the corresponding PDCCH, the UE may be configured to skip PDCCH monitoring.

According to another example, the controller 1310 may configure or instruct whether the UE monitors the downlink control channel for PDCCH monitoring occasions configured with both downlink symbols and SBFD symbols. In other words, when the PDCCH monitoring occasion or PDCCH candidates by the SS set configured for the UE partially or entirely overlap SBFD symbols, whether to monitor the PDCCH candidates in the corresponding SBFD symbol may be configured by the base station through higher layer signaling or MAC control element signaling. Alternatively, whether to monitor the PDCCH candidates in the corresponding SBFD symbol may be indicated by the base station through physical layer control signaling.

According to yet another example, the controller 1310 may transmit the downlink control channel only for PDCCH candidates configured in downlink symbols for PDCCH monitoring occasions configured with both downlink symbols and SBFD symbols. Alternatively, unlike this, the controller 1310 may transmit the downlink control channel only for PDCCH candidates configured in SBFD symbols for PDCCH monitoring occasions configured with both downlink symbols and SBFD symbols.

In other words, one PDCCH transmission and the corresponding PDCCH monitoring/reception may be restricted from being performed across different symbol types. Specifically, the controller 1310 may avoid transmitting one PDCCH for the UE across SBFD symbols and non-SBFD symbols. Further, the controller 1310 may configure the UE not to perform monitoring and corresponding PDCCH reception operation for the corresponding PDCCH candidate when the PDCCH candidate configured according to the control resource set configuration information and search space set configuration information includes both non-SBFD symbols and SBFD symbols. In this case, the UE may be configured to skip monitoring of all PDCCH candidates configured in the corresponding PDCCH monitoring occasion.

Alternatively, among the PDCCH candidates configured in the corresponding PDCCH monitoring occasion, the UE may be configured to perform monitoring for PDCCH candidates configured on a single symbol type and not monitor only PDCCH candidates configured across different symbol types. In this case, the symbol type to monitor may be configured by the base station or determined by the first symbol type of the corresponding PDCCH monitoring occasion.

As yet another example, the controller 1310 may transmit the downlink control channel by distinguishing between common search space and UE-specific search space for PDCCH monitoring occasions configured with both downlink symbols and SBFD symbols.

In this case, for the common search space, when the PDCCH monitoring occasion includes SBFD symbols, the UE may be configured to skip the corresponding PDCCH monitoring occasion. Alternatively, the UE may be configured to monitor only PDCCH candidates belonging to symbols configured as DL among all PDCCH candidates configured across downlink symbols and SBFD symbols in the corresponding PDCCH monitoring occasion. Alternatively, PDCCH candidates may be reconfigured using only DL-configured symbols among the downlink symbols and SBFD symbols constituting the corresponding PDCCH monitoring occasion, so that the UE monitors only the corresponding PDCCH candidates.

Unlike this, for the UE-specific search space, the UE may be configured to perform PDCCH monitoring and reception across the corresponding DL symbols and SBFD symbols according to the base station's configuration for symbol types, PDCCH transmission/reception configuration information, etc., or implicitly.

According to yet another example, the controller 1310 may transmit the downlink control channel according to PDCCH reception configuration information based on either downlink symbols or SBFD symbols or transmit the downlink control channel according to separately configured PDCCH reception configuration information for PDCCH monitoring occasions configured with both downlink symbols and SBFD symbols. To that end, TCI state configuration information, DM-RS scrambling sequence ID information, precoder granularity information, control channel element-to-resource element group (CCE-to-REG) mapping information, etc., included in the PDCCH reception configuration information may be configured separately (e.g., separate sets of parameters may be maintained for each symbol type).

Specifically, one control resource set configuration information for the UE may separately include PDCCH reception configuration information for PDCCH transmission and reception through DL symbols and PDCCH reception configuration information for PDCCH transmission and reception through SBFD symbols.

In this case, the base station may configure or instruct the UE to follow PDCCH reception configuration information for either downlink symbols or SBFD symbols.

Alternatively, for PDCCH monitoring occasions configured with both downlink symbols and SBFD symbols, PDCCH reception configuration information may be configured separately.

Alternatively, it may be configured to implicitly follow PDCCH reception configuration of a specific symbol type without separate component/instruction from the base station. For example, it may be configured to follow PDCCH transmission/reception configuration according to the first symbol type of the corresponding PDCCH monitoring occasion or PDCCH candidates. Alternatively, it may be configured to follow PDCCH reception configuration according to the last symbol type of the corresponding PDCCH monitoring occasion or PDCCH candidates. Alternatively, it may be configured to follow PDCCH reception configuration of a specific symbol type, e.g., SBFD symbol type. Alternatively, it may be configured to follow PDCCH reception configuration of DL symbol type.

According to the embodiments described above, a downlink control channel may be transmitted and received efficiently within a slot or symbol where full-duplex communication is applied.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component" , "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the present disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the present disclosure shall be construed on the basis of the accompanying claims in such a manner that all of the technical ideas included within the scope equivalent to the claims belong to the present disclosure.

### CROSS-REFERENCE TO RELATED APPLICATION

This application claims the benefit under 35 U.S.C. §119(a) of Korean Patent Application No. 10-2023-0004678 filed on January 12, 2023, and Korean Patent Application No. 10-2024-0005029 filed on January 11, 2024, the entire contents of which are incorporated herein by reference. This application also claims priority based on the same grounds to one or more foreign applications outside the United States, the entire contents of which are likewise incorporated herein by reference.

## Claims

1. A method for receiving a physical downlink control channel (PDCCH) by a user equipment (UE) in full-duplex communication, the method comprising:
receiving control resource set (CORESET) configuration information for at least one CORESET for reception of the PDCCH;
receiving search space set (SS set) configuration information for at least one SS set based on the CORESET configuration information; and
monitoring the PDCCH at one or more PDCCH monitoring occasions determined based on the CORESET configuration information and the SS set configuration information,
wherein the monitoring the PDCCH includes performing the monitoring of the PDCCH differently at i) a PDCCH monitoring occasion configured with only one of a downlink symbol or a subband full duplex (SBFD) symbol and ii) a PDCCH monitoring occasion configured with both of the downlink symbol and the SBFD symbol.

2. The method of claim 1, wherein the monitoring the PDCCH includes:
skipping the monitoring of the PDCCH at the PDCCH monitoring occasion configured with both of the downlink symbol and the SBFD symbol.

3. The method of claim 1, wherein the monitoring the PDCCH incudes:
performing the monitoring of the PDCCH according to a base station's indication or configuration of whether to monitor a PDCCH , at the PDCCH monitoring occasion configured with both of the downlink symbol and the SBFD symbol.

4. The method of claim 1, wherein the monitoring the PDCCH includes:
performing the monitoring of the PDCCH only for a PDCCH candidate configured in a downlink symbol, at the PDCCH monitoring occasion configured with both of the downlink symbol and the SBFD symbol.

5. The method of claim 1, wherein the monitoring the PDCCH includes:
performing the monitoring of the PDCCH only for a PDCCH candidate configured in an SBFD symbol, at the PDCCH monitoring occasion configured with both of the downlink symbol and the SBFD symbol.

6. The method of claim 1, wherein the monitoring the PDCCH includes:
performing monitoring of the PDCCH differently for a common search space and a UE-specific search space at the PDCCH monitoring occasion configured with both the of downlink symbol and the SBFD symbol.

7. The method of claim 1, wherein the monitoring the PDCCH includes:
at the PDCCH monitoring occasion configured with both of the downlink symbol and the SBFD symbol, performing the monitoring of the PDCCH according to PDCCH reception configuration information of a downlink symbol or of an SBFD symbol or performing the monitoring of the PDCCH according to separately configured PDCCH reception configuration information.

8. A method for transmitting a physical downlink control channel (PDCCH) by a base station in full-duplex communication, the method comprising:
transmitting control resource set (CORESET) configuration information for at least one CORESET for reception of a downlink control channel; transmitting search space set (SS set) configuration information for at least one search space set based on the CORESET configuration information; and
transmitting the PDCCH at one or more PDCCH monitoring occasions determined based on the CORESET configuration information and the ss set configuration information,
wherein the transmitting the PDCCH includes transmitting the PDCCH differently at i) a PDCCH monitoring occasion configured with only one of a downlink symbol or a subband full duplex (SBFD) symbol and ii) a PDCCH monitoring occasion configured with both the downlink symbol and the SBFD symbol.

9. The method of claim 8, wherein the transmitting the downlink control channel includes:
skipping transmission of the PDCCH at the PDCCH monitoring occasion configured with both of the downlink symbol and the SBFD symbol.

10. The method of claim 8, further comprising:
configuring or indicating whether a UE monitors a PDCCH, at the PDCCH monitoring occasion configured with both of the downlink symbol and the SBFD symbol.

11. The method of claim 8, wherein the transmitting the downlink control channel includes:
transmitting the PDCCH only for a PDCCH candidate configured in a downlink symbol, at the PDCCH monitoring occasion configured with both of the downlink symbol and the SBFD symbol.

12. The method of claim 8, wherein the transmitting the downlink control channel includes:
transmitting the PDCCH only for a PDCCH candidate configured in an SBFD symbol, at the PDCCH monitoring occasion configured with both the downlink symbol and the SBFD symbol.

13. The method of claim 8, wherein the transmitting the downlink control channel includes:
transmitting the PDCCH differently for each of a common search space and a UE-specific search space, at the PDCCH monitoring occasion configured with both the downlink symbol and the SBFD symbol.

14. The method of claim 8, wherein the transmitting the downlink control channel includes:
at the PDCCH monitoring occasion configured with both the downlink symbol and the SBFD symbol, transmitting the PDCCH according to PDCCH transmission configuration information of a downlink symbol or an SBFD symbol or transmitting the PDCCH according to separately configured PDCCH transmission configuration information.

15. A user equipment (UE) receiving a physical downlink control channel (PDCCH) in full-duplex communication, comprising:
a transmitter;
a receiver; and
a controller controlling an operation of the transmitter and the receiver,
wherein the controller:
receives control resource set (CORESET) configuration information for at least one CORESET for reception of a downlink control channel;
receives search space set (SS set) configuration information for at least one SS set based on the control resource set configuration information; and
monitors the PDCCH at one or more PDCCH monitoring occasions determined based on the CORESET configuration information and the SS set configuration information,
wherein the controller performs the monitoring of the downlink control channel differently at i) a PDCCH monitoring occasion configured with only one of a downlink symbol or a subband full duplex (SBFD) symbol and ii) a PDCCH monitoring occasion configured with both of the downlink symbol and the SBFD symbol.

16. The UE of claim 15, wherein the controller skips the monitoring of the downlink control channel at the PDCCH monitoring occasion configured with both the downlink symbol and the SBFD symbol.

17. The UE of claim 15, wherein the controller performs the monitoring of the downlink control channel according to whether to monitor a downlink control channel, which is configured or indicated by a base station, at the PDCCH monitoring occasion configured with both of the downlink symbol and the SBFD symbol.

18. The UE of claim 15, wherein the controller performs the monitoring of the downlink control channel only for a PDCCH candidate configured in a downlink symbol, at the PDCCH monitoring occasion configured with both of the downlink symbol and the SBFD symbol.

19. The UE of claim 15, wherein the controller performs the monitoring of the downlink control channel only for a PDCCH candidate configured in an SBFD symbol, at the PDCCH monitoring occasion configured with both of the downlink symbol and the SBFD symbol.

20. The UE of claim 15, wherein the controller performs the monitoring of the downlink control channel differently for each of a common search space and a UE-specific search space, at the PDCCH monitoring occasion configured with both of the downlink symbol and the SBFD symbol.
